# EUROPEAN PATENT APPLICATION

(11) **EP 1 267 271 A2**
(43) Date of publication of application: **18.12.2002**
(21) Application number: 02008358.0
(22) Date of filing: 12.04.2002
(51) Int. Cl.: G06F 15/173

(54) **On-chip communication architecture and method**

(30) Priority: 15.06.2001 US 298663 P; 04.09.2001 US 946097
(71) Applicant: ALCATEL, 75008 Paris (FR)
(72) Inventor: Cook, Scott B., Richardson, TX 75080 (US)
(74) Representative: Dreiss, Fuhlendorf, Steimle & Becker

(57) **Abstract**

A chip is described that incorporates a distributed bus architecture which enable packets of data to be communicated between multiple source/destination nodes. The chip can be designed such that each source/destination node monitors a connecting path (e.g., bus) for receipt of a packet of data. And, upon receiving a packet of data at one of the source/destination nodes, that source/destination node then determines whether the packet of data is addressed to that node. If the packet of data is addressed to that source/destination node, then that node takes the data from the packet of data. Otherwise, if the packet of data is not addressed to that source/destination node, then that node transmits the packet of data on the connecting path to a neighboring source/destination node. The source/destination nodes can also insert data into a packet of data addressed to another source/destination node. Also described are methods for making and using the chip.

## Description

### BACKGROUND OF THE INVENTION

### Field of the Invention

The present invention relates in general to a chip that incorporates a distributed bus architecture which enables packets of data to be communicated between multiple source/destination nodes.

### Description of Related Art

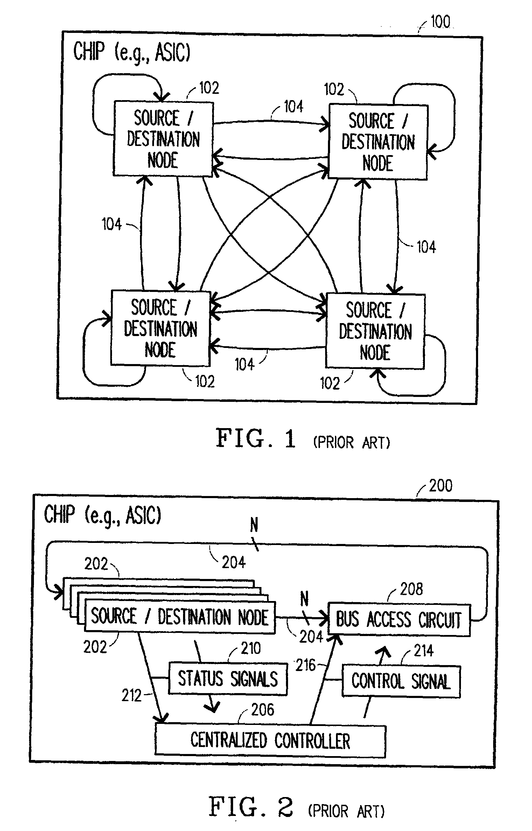

Today one of the most significant challenges for a designer of a digital chip is coming up with an effective way of moving data from source nodes to destination nodes. If the chip had just one source node and one destination node, then the designer would have no problem designing the chip. The designer would simply run a connecting path having N wires (corresponding to N bits) from an output of the source node to an input of the destination node. A problem begins to arise when there are several source nodes and several destination nodes on the chip. The problem is even more complex when a source node is also a destination node as shown hereinafter. This situation is shown in FIGURE 1.

Referring to FIGURE 1 (PRIOR ART), there is a block diagram illustrating a traditional chip 100 that uses a hardwired architecture to connect four source/destination nodes 102. In this example, each source/destination node 102 (only four shown) has a distinct connecting path 104 (sixteen shown) going to and coming from the other source/destination nodes 102. There are many drawbacks associated with the hardwired architecture. First, the number of connecting paths 104 becomes very large as the number of source/destination nodes 102 increases. In general the number of connecting paths 104 becomes S+(S-1)*S where S is the number of source/destination nodes 102. The number of connecting wires making up each connecting path 104 is even larger depending on the width of the connecting path 104 which is generally between 8 to 64 bits wide. Secondly, the large number of connecting paths 104 leads to congestion even though the completely connected chip 100 allows several simultaneous data transactions to occur over independent connecting paths 104. Thirdly, the addition of new source/destination nodes 102 involves massive rewiring which affects each source/destination node 102. In fact, the massive amounts of wiring between the source/destination nodes 102 leads to routing and layout problems that can make it impossible to design and manufacture the chip 100. As such, it is not practical to use the hardwired architecture to design a chip which has hundreds if not thousands of source nodes and destination nodes. Today the designer uses a centralized bus architecture or a data bus to connect multiple source/destination nodes. The basic components of a chip incorporating the centralized bus architecture is shown below in FIGURE 2.

Referring to FIGURE 2, there is a block diagram illustrating a traditional chip 200 that uses a centralized bus architecture to connect multiple source/destination nodes 202. The main components associated with the centralized bus architecture include a bus 204, a centralized controller 206 and a bus access circuit 208. The bus 204 has data paths reaching out to every source/destination node 202 on the chip 200, which means that the bus 204 can be used by only one source/destination node 202 at a time to send data. In other words, there can only be one source/destination node 202 sending data at one time on the bus 204 but several source/destination nodes 202 can receive the data.

The centralized controller 206 operates to determine which source/destination node 202 has access at any given time to the bus 204. To determine which source/destination node 202 has access to the bus 204, the centralized controller 206 receives a status signal 210 on a data path 212 from each of the source/destination nodes 202. Each status signal 210 indicates whether the corresponding source/destination node 202 has data to send on the bus 204. The centralized controller 206 upon receiving the status signals 210 sends a control signal 214 on a data path 216 to the bus access circuit 208. In response to receiving the control signal 214, the bus access circuit 208 switches the whole bandwidth of the bus 204 to the source/destination node 202 that needs to send data on the bus 204.

The centralized bus architecture has a number of disadvantages. First, the aggregation of large numbers of traces (wires) into a small area containing the centralized controller 206 and the bus access circuit 208 results in routing problems when designing the chip 200. Secondly, the large numbers of connections in the bus 204 from a single source/destination node 202 to geographically distant source/destination nodes 202 can lead to fan-out and timing problems. In addition, the centralized bus architecture uses bandwidth inefficiently, because only one source/destination node 202 can access the bus 204 at a time. And, if more than one source/destination node 202 has data to send, then the centralized controller 206 must arbitrate the use of the bus 204. These problems add both delay and complexity to the design of the chip 200 which become even more apparent after describing several different embodiments of the bus access circuit 208.

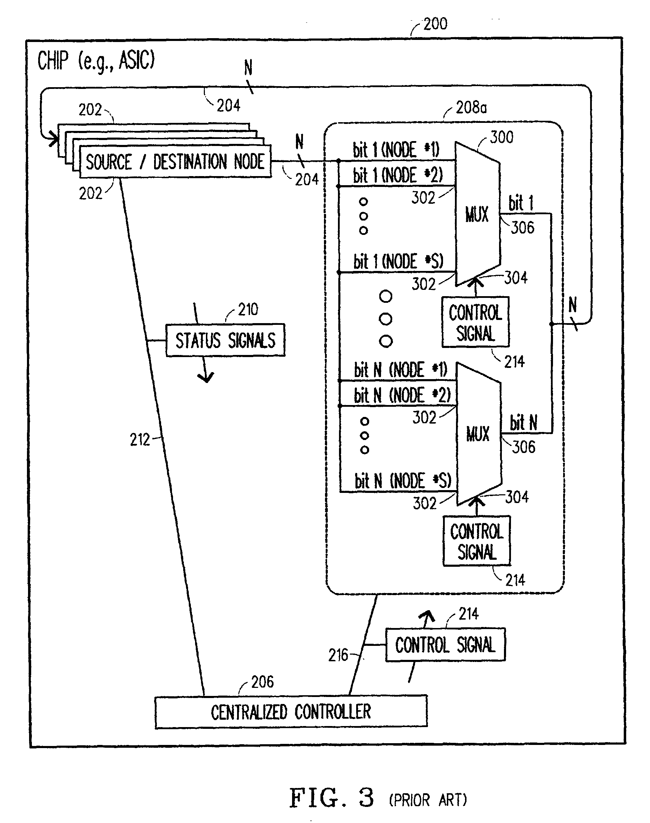

Referring to FIGURE 3 (PRIOR ART), there is a block diagram illustrating a first embodiment of the bus access circuit 208a used in the traditional chip 200. In this embodiment, the bus access circuit 208a includes N multiplexers 300 each of which has a source input 302 connected to one of the source/destination nodes 202. Each N multiplexer 300 also has a select input 304 which receives the control signal 214 from the centralized controller 206, and a series of bus outputs 306 at which is attached each bit of the bus 204 (N bits wide).

In operation, the centralized controller 206 sends the control signal 214 to the select inputs 304 of the N multiplexers 300 to indicate which one of the source/destination nodes 202 is to have access to the bus 204. The N multiplexers 300 then connects bit 1 through bit N of that source/destination node 202 to the bus 204. In other words, the centralized controller 206 controls the N multiplexers 300 to make sure that only one source/destination node 202 is talking on the bus 204 at a time.

The problem with this type of bus access circuit 208a is that it requires a great deal of hardware. There is an S-wide multiplexer 300 for each of the data bits in the bus 204 and, if N is large, then there is a board-full of multiplexers 300. Adding new source/destination nodes 202 can also become complicated when the designer runs out of source inputs 302 at the multiplexers 300.

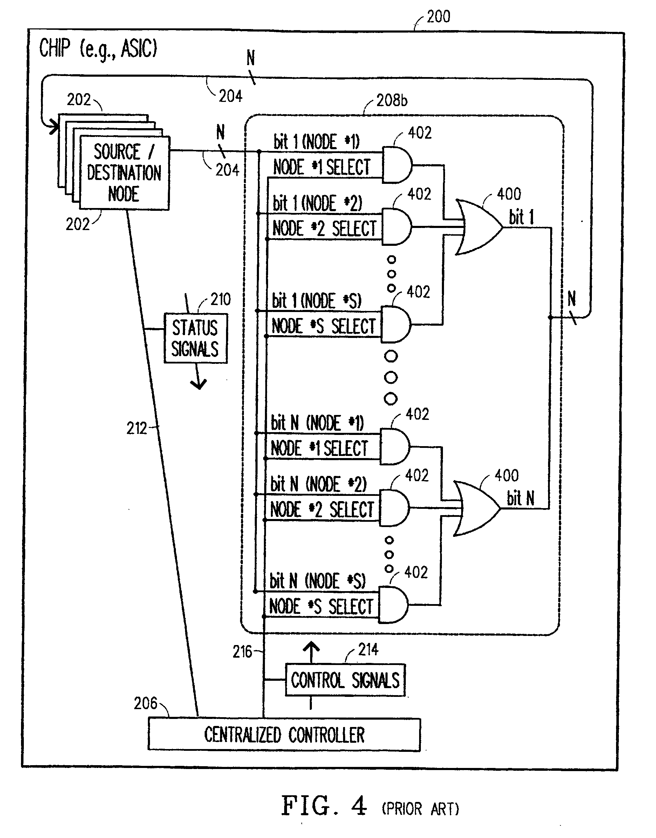

Referring to FIGURE 4 (PRIOR ART), there is a block diagram illustrating a second embodiment of the bus access circuit 208b used in the traditional chip 200. In this embodiment, the bus access circuit 208b includes a series of OR gates 400 that are used to merge all of the source/destination nodes 202 onto the bus 204. For S, N-bit source/destination nodes 202, the bus access circuit 208b would have N OR gates 400. Each OR gate 400 accepting S inputs. This produces the merging required to give all source/destination nodes 202 access to the single bus 204. It does not however, provide the control needed to allow only one source/destination node 202 onto the bus 204 at a time. To accomplish this, each source/destination node 202 must have a control signal 214 (see e.g., "Node 1 select" and "Node S select" signals) from the centralized controller 206 to open or close an AND gate 402 on each of its data bits. Typically, the source/destination nodes 202 have an AND gate 402 on each data bit where one data bit connects to an input and the control signal 214 connects to the other input of the AND gate 402. The output of the AND gates 402 for one data bit are connected to the inputs of one of the OR gates 400. And, the output of the OR gates 400 are connected to the bus 204.

This type of bus access circuit 208b has little advantage. It performs the same function as the first embodiment of the bus access circuit 208a except that the multiplexers 300 are split into OR gates 400 and AND gates 402. The main problem with this bus access circuit 208b lies with the possible fan-out on the OR gates 400 and the number of control signals 214 required.

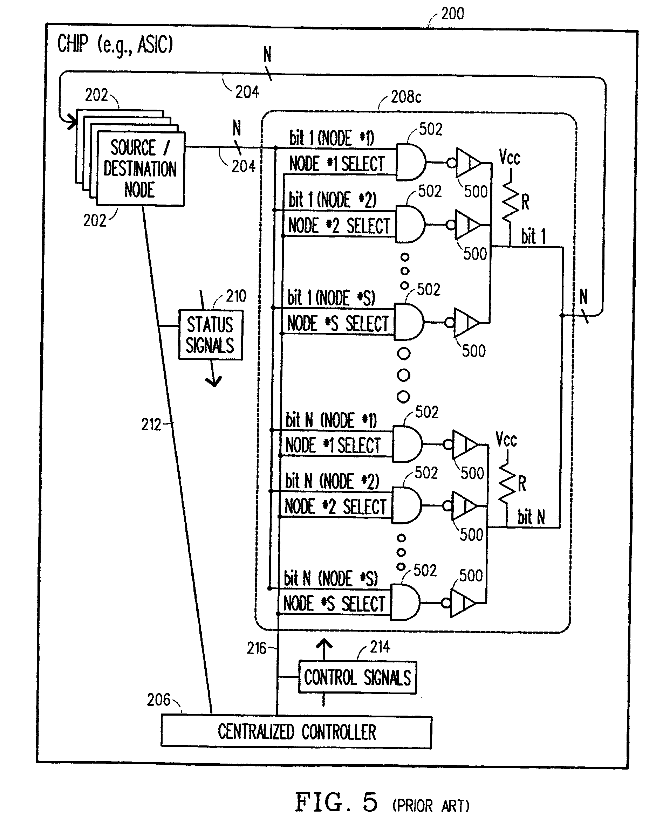

Referring to FIGURE 5 (PRIOR ART), there is a block diagram illustrating a third embodiment of the bus access circuit 208c used in the traditional chip 200. In this embodiment, the bus access circuit 208c is very similar to the bus access circuit 208b of the second embodiment except that open-collector gates 500 replace the OR gates 400. The open-collector gates 500 produce a wired-OR logic when true is represented by a low voltage. The main advantage of open-collector gates 500 is the elimination of the wide OR gates 402 used in bus access circuit 208b. As long as only one source/destination node 202 at a time is on the bus 204, the designer may connect a large number of open collector outputs together. Achieving proper control of the bus 204 with open-collector gates 500 wired with OR logic also requires the use of AND gates 502 and control signals 214 as in the bus access circuit 208b. Again, the centralized controller 206 must still control each of the source/destination nodes 202 so that at most one source/destination node 202 is talking on the bus 204 at a time.

This bus access circuit 208c is very similar to the bus access control technique shown in FIGURE 4. Each source/destination node 202 in order to have access to the bus 204 is required to have the proper control signal 214 that originates from the centralized controller 206. The number of control signals 214 is equal to the number of source/destination nodes 202 connected to the bus 204 and these control signals 214 can cause routing problems for the chip designer.

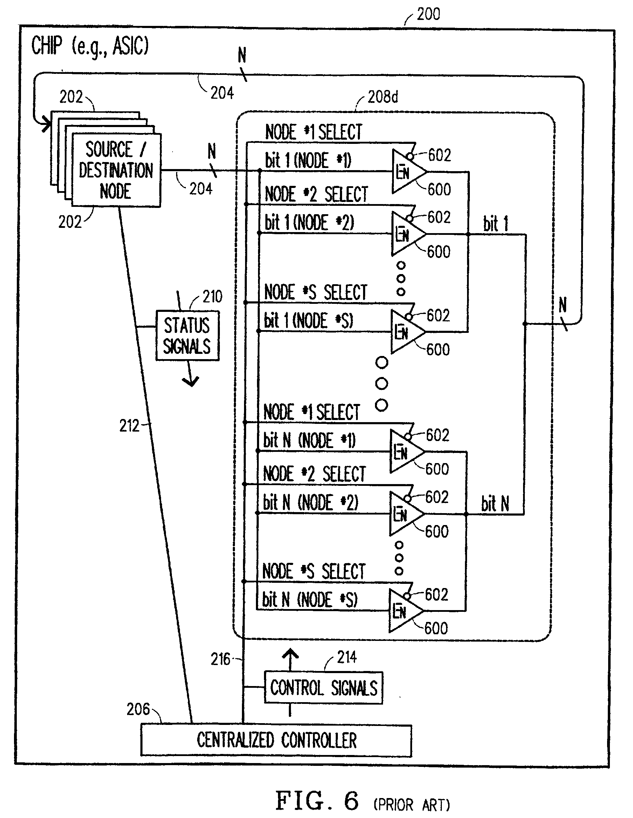

Referring to FIGURE 6 (PRIOR ART), there is a block diagram illustrating a fourth embodiment of the bus access circuit 208d used in the traditional chip 200. In this embodiment, the bus access circuit 208d includes three-state output gates 600 which as its name implies has three stable states instead of the customary two. The three-state output gates 600 have in addition to the usual high and low voltage levels, a third state which provides a high-impedance mode, usually called Z, in which the output of the three-state output gate 600 appears as if it were disconnected from the bus 204. The three-state output gate 600 requires an enabling three-state control input 602 which receives a control signal 214 (see e.g., "Node 1 select" and "Node S select" signals) from the centralized controller 206. When the output is enabled, the three-state output gate 600 transmits the normal H or L signal presented by the source/destination node 202 at the input of the three-state output gate 602. If the output is disabled, the output of the three-state output gate 602 is for all practical purposes, not there.

This bus access circuit 208d is very similar to the other two bus access control techniques shown in FIGURES 4-5. Each source/destination node 202 in order to have access to the bus 204 is required to have the proper control signal 214 that originates from the centralized controller 206. The number of control signals 214 is equal to the number of source/destination nodes 202 connected to the bus 204 and these control signals 214 can cause routing problems for the chip designer.

As described above, all of these bus access circuits 208 and the centralized bus architecture itself have a number of disadvantages. The first problem with the centralized bus architecture is that the bus access circuit 208 needs to be connected to the centralized controller 206 which leads to routing congestion. One source of the routing problem is attributable to the fact that the centralized controller 206 must send control signals 214 to the bus access circuit 208 that is located near the source/destination nodes 202 which may reside anywhere on the chip 200. Another source of the routing problem is attributable to the fact the each source/destination node 202 must send status signals 210 to the centralized controller 206. Each status signal 210 indicates the state of their respective source/destination node 202 and are used by the centralized controller 206 to arbitrate which source/destination node 202 has access to the bus 204. Once again, because the source/destination nodes 202 can reside anywhere on the chip 200, this may require routing the status signals 210 across critical regions of the chip 200. And, as the number of source/destination nodes 202 increases the amount of routing congestion increases.

Another problem with the centralized bus architecture is associated with inefficient bandwidth utilization. The centralized bus architecture does not effectively use the bandwidth of the bus 204, because the bus 204 can be used by only one source/destination node 202 at a time. Moreover, since the bus 204 must connect all of the source/destination nodes 202 on the chip 200, it becomes more difficult for one source/destination node 202 to communicate with a geographically distant source/destination node 202 and still meet timing closure requirements. And, as the clock frequencies on the chips increase, the timing closure problem becomes more pronounced. This is because it takes a finite amount of time for signals to propagate from one source/destination node 202 to a geographically distant source/destination node 202. The amount of time it takes for the signals to propagate between source/destination nodes 202 is dependent on a whole number of factors including gate count and congestion. If the chip 200 is congested, it may be necessary to route the bus 204 in a less than direct route. This may relieve congestion in a critical region, but it may make it very difficult to meet the timing closure requirements, especially at higher clock frequencies.

Yet another problem with the centralized bus architecture is associated with the difficulty of testing the chip 200. To test the chip 200, the manufacturer or field technician can run a diagnostic test after manufacturing the chip 200 or while the chip 200 is in the field. The purpose of the diagnostic test is to determine if the chip 200 is viable. The problem is that several source/destination nodes 202 share a common bus 204 and, as such, these source/destination nodes 202 cannot simultaneously access the bus 204. This means that the diagnostic test must take into account not only the physical interconnections of the chip 200 but it must also consider the functionality of the logic of the centralized bus architecture. The result of this added constraint is that it may be more difficult to create a diagnostic test that meets both constraints. This problem can reduce the value of the diagnostic test and may make it longer to run the diagnostic test.

Still yet another problem with the centralized bus architecture is caused by the source/destination nodes 202 operating in different time domains. Some times, it is necessary for several different source/destination nodes 202 which happen to be operating in different time domains to use a single bus 204. These time domains may or may not be correlated. If these time domains are not correlated, they may "slide" past one another randomly. As such, the centralized controller 206 is required to evaluate which time domain is leading and lagging in order to arbitrate access to the bus 204 so that the source/destination node 202 with the advancing clock domain gets the highest priority on the bus 204. The source/destination node 202 with the advancing time domain must get the highest priority so that no data is lost. Data can be lost if the source/destination node 202 with the advancing time domain has data to transmit, but is not granted assess before the next data to be sent arrives. Because, the data is arriving sooner than expected due to the advancing clock and if priority isn't assigned to this source/destination node 202, then the current data to be sent may be over written by the next data to be sent. As such, chips are more difficult to design when they have source/destination nodes 202 which operate in different time domains.

Accordingly, there is and has been a need for a chip that has a bus architecture that addresses the aforementioned problems and other problems associated with the traditional hardwired bus architecture and the traditional centralized bus architecture. This need and other needs are addressed by the chip of the present invention.

### BRIEF DESCRIPTION OF THE INVENTION

The chip of the present invention addresses the deficiencies of the prior art by incorporating a distributed bus architecture which enable packets of data to be effectively communicated between multiple source/destination nodes. Basically, the chip can be designed such that each source/destination node monitors a connecting path (e.g., bus) for receipt of a packet of data. And, upon receiving a packet of data at one of the source/destination nodes, that source/destination node then determines whether the packet of data is addressed to that node. If the packet of data is addressed to that source/destination node, then that node takes the data from the packet of data. Otherwise, if the packet of data is not addressed to that source/destination node, then that node transmits the packet of data on the connecting path to a neighboring source/destination node. The source/destination nodes can also insert data into a packet of data addressed to another source/destination node. The present invention also includes methods for making and using the chip.

### BRIEF DESCRIPTION OF THE DRAWINGS

A more complete understanding of the present invention may be had by reference to the following detailed description when taken in conjunction with the accompanying drawings wherein:
FIGURE 1 (PRIOR ART) is a block diagram illustrating a traditional chip incorporating a hardwired architecture used to connect multiple source/destination nodes;
FIGURE 2 (PRIOR ART) is a block diagram illustrating a traditional chip incorporating a centralized bus architecture used to connect multiple source/destination nodes;
FIGURE 3 (PRIOR ART) is a block diagram illustrating a first embodiment of a bus access circuit used in the traditional chip shown in FIGURE 2;
FIGURE 4 (PRIOR ART) is a block diagram illustrating a second embodiment of a bus access circuit used in the traditional chip shown in FIGURE 2;
FIGURE 5 (PRIOR ART) is a block diagram illustrating a third embodiment of a bus access circuit used in the traditional chip shown in FIGURE 2;
FIGURE 6 (PRIOR ART) is a block diagram illustrating a fourth embodiment of a bus access circuit used in the traditional chip shown in FIGURE 2;
FIGURE 7 is a block diagram illustrating a chip having a distributed bus architecture used to connect multiple source/destination nodes in accordance with the present invention;
FIGURE 8 is a block diagram illustrating in greater detail one of the source/destination nodes shown in FIGURE 7;
FIGURE 9 is a flowchart illustrating the basic steps of one preferred method for using the chip shown in FIGURE 7;
FIGURE 10 is a flowchart illustrating the basic steps of another preferred method for using the chip shown in FIGURE 7; and
FIGURE 11 is a flowchart illustrating the basic steps of a preferred method for making the chip shown in FIGURE 7.

### DETAILED DESCRIPTION OF THE DRAWINGS

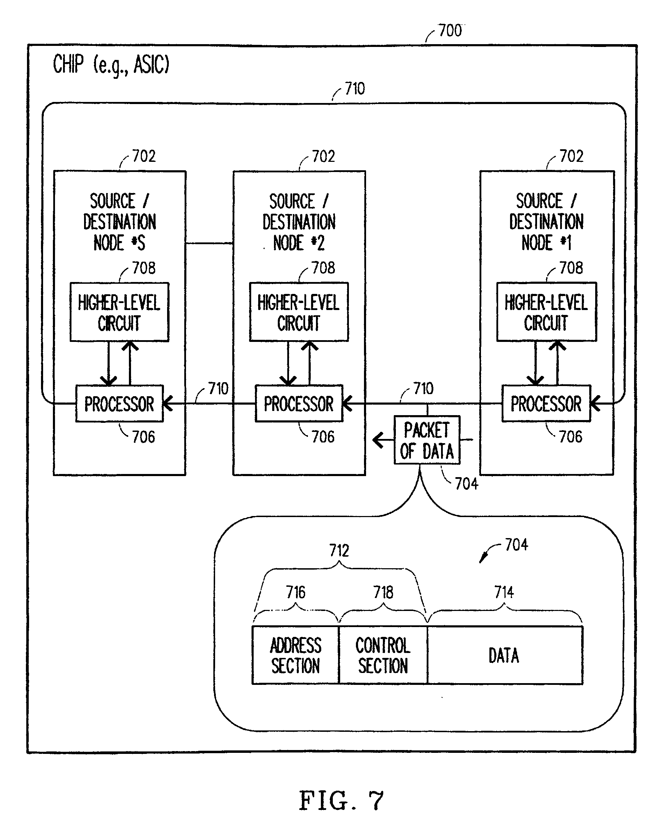

Referring to FIGURE 7, there is a block diagram illustrating a chip 700 in accordance with the present invention. The chip 700 includes a series of source/destination nodes 702 (only three shown) coupled to one another using a distributed bus architecture that enables packets of data 704 (only one shown) to be communicated between the source/destination nodes 702. Each source/destination node 702 includes a lower level processor 706 and a higher-level circuit 708. A discussion as to how the processor 706 and the higher-level circuit 708 operate is provided below after a brief discussion about the architecture and features of the chip 700.

The bus in accordance with the distributed bus architecture is formed from several processors 706 connected end-to-end (input to output) by several connecting paths 710. In one embodiment, the bus can be viewed as a ring where the processors 706 are connected in series to one another such that the output of the last processor 706 is connected to the input of the first processor 706. The ring is referred to as a time divided ring (TDR) bus architecture. The TDR bus architecture allows the available bandwidth of the bus to be divided between all of the processors 706. This allows quicker bus access times, and the number of connections is S reduced from S+(S-1)*S as needed in the traditional chip 200. It should be noted that since the processors 706 are connected end-to-end the packets of data 704 flow in one direction.

Under this scheme, the bus is no longer a single node that must be arbitrated from a single centralized controller 206 as in the traditional chip 200 (see FIGURE 2). As such, the chip 700 incorporating the distributed bus architecture has several advantages over the traditional chip 200.

Following is a brief description of some of these advantages:
- The chip 700 distributes the bus intelligence between all of the source/destination nodes 702 instead of using a centralized controller as in the traditional chip 200. As a result, the chip 700 does not have the routing problems associated with the traditional chip 200.
- The chip 700 has better bandwidth utilization because not all of the source/destination nodes 702 share the bus from point A to point B as in the traditional chip 200.
- The chip 700 has connections between neighboring source/destination nodes 702 which makes the timing path shorter and therefore easier to close when compared to the timing paths in the traditional chip 200.
- The chip 700 and in particular the higher-level circuits 708 in the source/destination nodes 702 can operate in a different time domains without experiencing the time closure problems associated with the traditional chip 200.

The packets of data 704 can be thought of in terms of information packets traveling from a source node to a destination node. The information packet is similar to the data packets that flow through telecommunications networks. As such, the processor 706 has similar characteristics and functions as a medium access control (MAC) processor implemented within an Open System Interconnect (OSI) model. Likewise, the higher-level circuit 708 is similar to an application layer implemented within the OSI model.

Each packet of data 704 includes a header section 712 and a payload section 714. The header section 712 contains an address section 716 and a control section 718. The address section 716 contains bits that indicate which source/destination node(s) 702 are to receive the data in the packet of data 704. The address section 716 may also contain certain bits which indicate that the receiving source/destination node 702 can overwrite and insert data into the payload section 714 which is destined for another source/destination node 702 (see, empty bucket packet of data in FIGURE 10). The control section 718 contains bits that are used by the processor 706 so it can understand what to do with the data in the payload section 714 once the packet of data 704 has reached its destination. In addition, the control section 718 contains bits that indicate the type of data (e.g., TOH, POH, status, configuration) contained in the payload section 714.

Again, the packets of data 704 travel from one processor 708 to another processor 706 until reaching their destination. Each processor 706 generally transfers one packet of data 704 during a single clock cycle to their neighboring processor 706. The physical closeness of the processor 706 and its neighboring processor 706 helps address the problematic timing closure issues associated with the traditional chip 200.

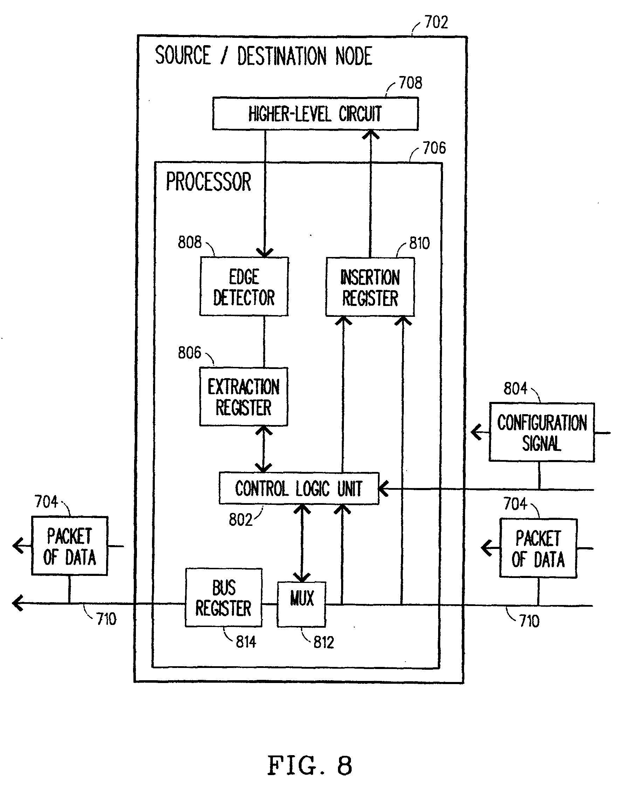

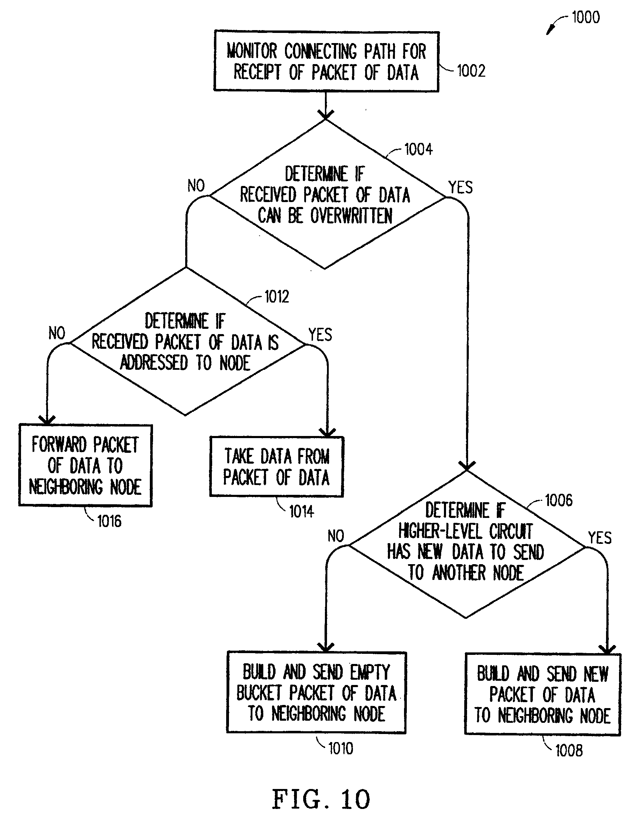

Referring to FIGURE 8, there is a block diagram illustrating in greater detail one of the source/destination nodes 702. The source/destination node 702 includes the processor 706 (e.g., MAC processor) and the higher-level circuit 708. The higher-level circuit 708 performs a specific operation with the payload data taken from the packet of data 704 by the processor 706. Typical operations include, for example, user application software, user circuitry, IP core, and math algorithms. It should be noted that the traditional source/destination node 202 in the traditional chip 200 does not include the processor 706 but does include some sort of higher-level circuit 708.

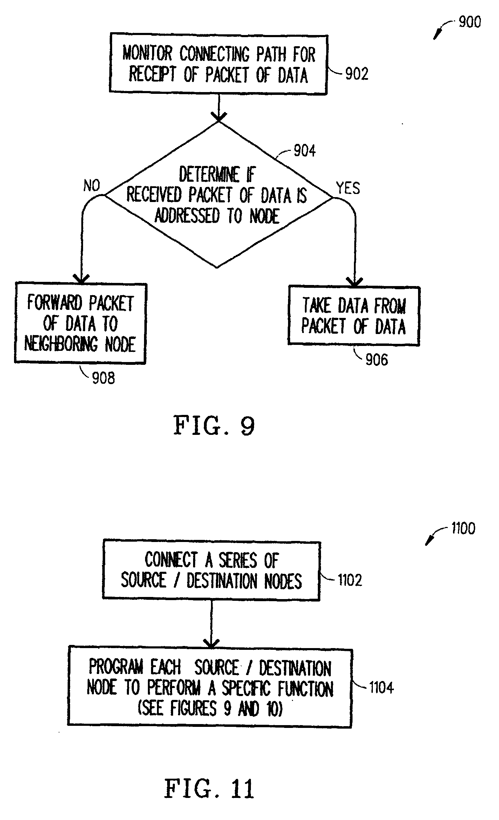

The processor 706 includes a control logic unit 802 that has the software that controls the actions of the processor 706 (see FIGURES 9-10). Preferably, the control logic unit 802 gets input from the connecting path 710, a configuration signal 804 (optional) and an extraction register 806. The configuration signal 804 can be used to specify a unique address, which the processor 706 uses as its destination address. The configuration signal 804 can also be used to provide control logic configuration information to the processor 706. For example, the control logic configuration information can define how many packets of data 704 (e.g., empty bucket packet of data) the processor 706 needs to send all the information stored in the extraction register 806. The extraction register 806 is connected to an edge detector 808 which together inform the control logic unit 802 when the higher-level circuit 708 has data that it wants to send in a packet of data 704 on the connecting path 710. In contrast, the control logic unit 802 also interacts with one or more insertion registers 810 (only one shown) which stores the data taken from the packets of data 704 that have the same address as the processor 706. The insertion register 808 transmit the stored data to the higher-level circuit 708.

The control logic unit 802 can control a multiplexer 812 to let a packet of data 704 not addressed to the processor 706 continue on the connecting path 710 into a bussing register 814. Or, the control logic unit 802 can let an empty bucket packet of data 704 (described below) or a newly overwritten packet of data 704 contains data from the extraction register 806 enter the connecting path 710 into the bussing register 814. The bussing register 814 is used to latch a packet of data 704 onto the connecting path 710 which is connected to the next processor 706 (not shown). It should be noted that the processor 706 can communicate with the higher-level circuit 708 at one speed (e.g., 6 MHz) and can communicate with the connecting path 710 at another speed (e.g., 78 MHz).

Referring to FIGURE 9, there is a flowchart illustrating the basic steps of a preferred method 900 for using the chip 700. The control logic unit 802 in each of the processors 706 is able to perform the steps of the preferred method 900 which enables packets of data 704 to be communicated between the source/destination nodes 702. Beginning at step 902, the processor 706 monitors the connecting path 710 for receipt of a packet of data 704. In particular, the control logic unit 802 is the component that monitors the connecting path 710 (see FIGURE 8).

At step 904, the processor 706 upon receiving the packet of data 704 determines whether the received packet of data 704 is addressed to the service/destination node 702. In particular, the control logic unit 802 would look at the address bits in the address section 716 of the packet of data 704 and determine whether these address bits match the address assigned to the processor 706.

If the packet of data 704 is addressed to the processor 706, then at step 906, the processor 706 takes the data from the payload section 714 of the packet of data 704. The payload data is then stored in the insertion register 810 until the higher-level circuit 708 retrieves the data and uses the data to perform some sort of task.

Otherwise if the packet of data 704 is not addressed to the node 706, then at step 908, the processor 706 transmits the packet of data 704 to a neighboring source/destination node 702. The preferred method 900 describes the most basic way in which one source/destination node 702 can communicate a packet of data 704 to another source/destination node 702. Of course, a source/destination node 702 should also be able to insert data into a packet of data 704 and transmit that packet of data 704 to one or more source/destination nodes 702. One way to accomplish this is describe below with respect to FIGURE 10.

Referring to FIGURE 10, there is a flowchart illustrating the basic steps of a preferred method 1000 for using the chip 700. The control logic unit 802 in each of the processors 706 is able to perform the steps of the preferred method 1000 which enables packets of data 704 to be communicated between the source/destination nodes 702 and also enable packets of data 704 to be overwritten by the source/destination nodes 702. Beginning at step 1002, the processor 706 monitors the connecting path 710 for receipt of a packet of data 704. In particular, the control logic unit 802 is the component that monitors the connecting path 710 (see FIGURE 8).

At step 1004, the processor 706 upon receiving the packet of data 704 determines whether the packet of data 704 can be overwritten with new data. One way the processor 706 is able to identify that a packet of data 704 can be overwritten with new data is if the packet of data 704 is assigned a special address. A packet of data 704 that can be overwritten is referred to herein as an empty bucket packet of data 704.

If the packet of data 704 has the special address and is able to be overwritten at step 1004, then at step 1006, the processor 706 determines whether the higher-level circuit 708 has any new data to send to another source/destination node 702. In particular, the control logic unit 802 checks the extraction register 806 and the edge detector 808 to determine whether the higher-level circuit 708 has any new data to send to another source/destination node 702.

If the higher-level circuit 708 has new data to send to another source/destination node 702 at step 1006, then at step 1008, the processor 706 builds a new packet of data 704 containing the new data and sends the new packet of data 704 to the next source/destination node 702. In particular, the control logic unit 802 can build a new packet of data 704 by inserting the new data into the payload section 714 of the new packet of data 704 and adding the appropriate address bits and control bits to the header section 712 of the new packet of data 704. This in effect overwrites the empty bucket packet. It should be noted that the new packet of data 704 is similar to the packet of data 704 that was received in step 1004 except that the header section 712 and the payload section 714 are different.

If the higher-level circuit 708 does not have any new data to send to another source/destination node 702 at step 1006, then at step 1010, the processor 706 builds a new packet of data 704 (e.g., empty-bucket packet of data) that is able to be overwritten and sends the new packet of data 704 to the next source/destination node 702. In particular, the control logic unit 802 can build a new empty bucket packet of data by inserting the appropriate address bits (e.g., "special" address bits) into the address section 716 of the packet of data 704. Alternatively, the central control unit 802 can just forward the empty bucket packet of data 704 received at step 1006 to the next source/destination node 702.

If the packet of data 704 does not have the special address and is not able to be overwritten at step 1004, then at step 1012, the processor 706 upon receiving the packet of data 704 determines whether the packet of data 704 is addressed to the service/destination node 702. In particular, the control logic unit 802 would look at the address bits in the address section 716 of the packet of data 704 and determine whether these address bits match the address assigned to the processor 706.

If the packet of data 704 is addressed to the processor 706 at step 1012, then at step 1014, the processor 706 takes the data from the payload section 714 of the packet of data 704. The payload data is then stored in the insertion register 810 until the higher-level circuit 708 retrieves the data and uses the data to perform some sort of task.

Otherwise if the packet of data 704 is not addressed to the source/destination node 702 at step 1012, then at step 1016, the processor 706 transmits the packet of data 704 to the neighboring source/destination node 702. It should be understood that the control logic unit 802 can perform steps 1012-1016 before performing steps 1004-1010.

The preferred methods 900 and 1000 described above do not describe the use of the control bits in the control section 718 of the packet of data 704. Control bits may be required in the packet of data 704 because several different types of data may be sent in the payload section 714 to the same destination. If this is the case, then the control bits would be used to indicate to the control logic unit 802 where to take and store the payload data from the packet of data 704. For example, the control logic unit 802 would take a CTL bit of "1" to mean that the payload data is stored in a first insertion register 810 while a CTL bit of "0" would mean the payload data is to be stored in a second insertion register (not shown) and so on.

Referring to FIGURE 11, there is a flowchart illustrating the basic steps of a preferred method 1100 for making the chip 700. Beginning at step 1102, a designer connects a series of the source/destination nodes 702 using connecting paths 710 on which packets of data 704 can be communicated from one source/destination node 702 to another source/destination node 702. As described above, each source/destination node 702 includes the lower level processor 706 and the higher-level circuit 708.

At step 1102, the designer programs each source/destination node 702 to perform a specific function. For example, as described above with respect to FIGURE 9, the designer can enable each processor 706 to monitor the connecting path 710 for receipt of a packet of data 704 and determine whether the received packet of data 704 is addressed to that processor 706. And, if the packet of data 704 is addressed to that processor 706, then the processor 706 takes the data from the packet of data 704. Otherwise, if the packet of data 704 is not addressed to that processor 706, then the processor 706 transmits the packet of data 704 on the connecting path 710 to a neighboring processor 706.

In another example, as described above with respect to FIGURE 10, the designer can enable each processor 706 to monitor the connecting path 710 for receipt of a packet of data 704 and determine whether the received packet of data 704 is able to be overwritten with new data. If the packet of data 704 can be overwritten, then the processor 706 determines whether it has new data to send to another processor 706. If yes, then the processor 706 builds a new packet of data containing the new data and sends the new packet of data 704 to another processor 706. Otherwise, if no, the processor 706 builds a new packet of data 704 (e.g., empty bucket packet of data) that is able to be overwritten and sends the new packet of data to another processor 706. If the received packet of data 704 is not able to be overwritten, the processor 706 determines whether the packet of data 704 is addressed to that processor 706. And, if the packet of data 704 is addressed to that processor 706, then the processor 706 takes the data from the packet of data 704. Otherwise, if the packet of data 704 is not addressed to that processor 706, then the processor 706 transmits the packet of data 704 on the connecting path 710 to a neighboring processor 706.

Although the node 702 is shown herein to include both a source node and a destination node, it should be that a chip can include source nodes, destination nodes and combined source/destination nodes. Accordingly, the chip 700 and methods 900, 1000 and 1100 should not be construed in a limited manner.

Following are some other advantages, features and capabilities of the present invention:
- The time divided ring (TDR) bus architecture and processors 706 eliminates the need for a centralized controller by taking advantage of the smaller device sizes available in current VDSM technology. The TDR bus architecture distributes the control logic between the source/destination nodes 702 in the design. Because, the decision-making logic is co-located with the source/destination node 702, there is no need for connections traveling long distances across the chip to a centralized controller. This reduction in long wires accounts for the reduction in routing congestion.
- The TDR bus architecture gives the designer more options for routing critical paths, because there is less routing congestion. Among these options, it is easier for a designer to find a path that meets timing requirements. Not only is the suitable path more likely to exist, if the path does exist it will be found sooner. Since, it is easier for the designer to close timing issues, the product development cycle will be shorter.
- Problems associated with testing the traditional chip 200 are overcome with chips that incorporate the TDR bus architecture and processors 706. For example, the test to verify the bus in chips 700 are simplified, because there is no longer the need to arbitrate the whole bus to just one source/destination node 702. This simplification reduces the test cycle and improves the effectiveness of testing tools. Moreover, because the TDR bus architecture allows all source nodes to access the bus simultaneously, it takes fewer test vectors to verify all nodes on the bus. Fewer test vectors (cycles) results in less time on the tester and thereby results in reduced parts cost.
- Another benefit of the present invention is that the test tools that analyze the circuit and develop the test vectors are more effective in creating patterns that test all possible fault classes. With the traditional centralized bus architecture, the testing tools needed to figure bus arbitration into the equation while attempting to find vectors that could test the circuit. This added constraint often resulted in a less effective vector set, because the bus arbitration had priority over fault testing. In other words, although the tool may have found a vector that was great for testing faults, if the tool did not also arbitrate the bus correctly then the tool had to discard this vector. This meant that the tool might need to accept a poor fault testing vector as the only vector acceptable simply because it arbitrated the bus correctly. Thus, by removing the need to arbitrate bus access, the test tools are free to choose the best fault-testing vector that it can find. This will both improve test coverage and reduce test vector development time by reducing the number of CPU cycles required by the diagnostic tool to develop a complete set of test vectors.
- As mentioned previously with the traditional chips 200 that incorporated the centralized bus architecture it is often necessary to arbitrate access to a single bus from multiple, uncorrelated time domains. If one (or several) of these clock domains is advancing relative to any of the others, it is possible to loose data by having it overwritten by the fast domain before that domain is given access to the bus. Because, the TDR bus architecture does not require arbitration to the bus, the problems with arbitrating multiple time domains is non-existent. The "empty bucket" process allows the source/destination nodes 702 to work on a first come first serve bases. This means that the faster node will always get priority to the bus.
- The processors 706 of the present invention can also be defined to handle multiple data types with different polling rates.
- The chips 700 of the present invention can be used in a wide variety of applications including, for example, telecommunication applications and optical applications (e.g., OC-192 systems). In general, this architecture works for all applications which have "well characterized" data and a required polling rate greater than the round trip time of the ring. "Well characterized" data is any data that can be manipulated into a known width and length. Please note this does not include a "fixed" width and length. It is not required that the data be fixed but it helps if the dimensions of the packets are known.

Although several embodiments of the present invention has been illustrated in the accompanying Drawings and described in the foregoing Detailed Description, it should be understood that the invention is not limited to the embodiments disclosed, but is capable of numerous rearrangements, modifications and substitutions without departing from the spirit of the invention as set forth and defined by the following claims.

## Claims

1. A chip, comprising:
a plurality of nodes, each of the nodes are coupled to one another using a distributed bus architecture that enables a packet of data to be communicated between the nodes.

2. The chip of Claim 1, wherein each node includes:
a lower level processor; and
a higher-level circuit that performs a specific operation with data taken from the packet of data received by said lower level processor on a connecting path from another lower level processor.

3. The chip of Claim 2, wherein said lower level processor is similar to a medium access control processor defined by an Open System Interconnect model.

4. The chip of Claim 2, wherein said higher-level circuit is similar to an application layer defined by an Open System Interconnect model.

5. The chip of Claim 2, wherein each higher-level circuit within each of the nodes can operate in a different time domain.

6. The chip of Claim 1, wherein said packet of data includes a header section and a payload section.

7. The chip of Claim 1, wherein said packet of data travels in one direction through said plurality of nodes.

8. The chip of Claim 1, wherein said distributed bus architecture enables bandwidth to be divided between the plurality of nodes.

9. The chip of Claim 1, wherein said distributed bus architecture is a time divided ring bus architecture.

10. The chip of Claim 1, wherein said chip is an application specific integrated circuit.

11. A method for using a chip incorporating a distributed bus architecture that enables packets of data to be communicated between a plurality of nodes, said method comprising the steps of:
monitoring, at a node, a connecting path for receipt of a packet of data;
determining whether the received packet of data is addressed to the node; and
if the packet of data is addressed to the node, taking the data from the packet of data; and
if the packet of data is not addressed to the node, transmitting the packet of data on the connecting path to another node.

12. The method of Claim 11, wherein said packet of data includes a header section and a payload section.

13. The method of Claim 11, wherein each node includes a lower level processor capable of taking the data from the packet of data and a higher-level circuit capable of performing a specific operation with the data taken from the packet of data.

14. The method of Claim 13, wherein said lower level processor is similar to a medium access control processor.

15. A method for using a chip incorporating a distributed bus architecture that enables packets of data to be communicated between a plurality of nodes, said method comprising the steps of:
monitoring, at a first node, a connecting path for receipt of a packet of data;
determining whether the received packet of data is able to be overwritten with new data;
if the packet of data is able to be overwritten, determining whether the first node has new data to send to a second node;
if yes, building a new packet of data containing the new data and sending the new packet of data to another node;
if no, building a new packet of data that is able to be overwritten with new data and sending the new packet of data to the second node;
if the received packet of data is not able to be overwritten, determining whether the packet of data is addressed to the first node;
if the packet of data is addressed to the first node, taking the data from the packet of data; and
if the packet of data is not addressed to the first node, passing the packet of data on the connecting path to the second node.

16. The method of Claim 15, wherein each node includes a lower level processor capable of taking the data from the packet of data and a higher-level circuit capable of performing a specific operation with the data taken from the packet of data.

17. The method of Claim 16, wherein said lower level processor is similar to a medium access control processor defined by an Open System Interconnect model.

18. The method of Claim 16, wherein said higher-level circuit is similar to an application layer defined by an Open System Interconnect model.

19. The method of Claim 16, wherein each higher-level circuit within each of the nodes can operate in a different time domain.

20. The method of Claim 15, wherein said packet of data includes a header section and a payload section.

21. The method of Claim 15, wherein said packet of data travels in one direction through said plurality of nodes.

22. The method of Claim 15, wherein said distributed bus architecture enables bandwidth to be divided between the plurality of nodes.

23. The method of Claim 15, wherein said distributed bus architecture is a time divided ring connecting path architecture.

24. A method for making a chip, said method comprising the step of:
connecting a plurality of nodes using a plurality of connecting paths on which packets of data can be communicated between said plurality of nodes.

25. The method of Claim 24, further comprising the step of programming each node to:
monitor the connecting path for receipt of a packet of data;
determine whether the packet of data is addressed to that node;
if the packet of data is addressed to that node, take the data from the packet of data; and
if the packet of data is not addressed to that node, transmit the packet of data on one of the connecting paths to a neighboring node.

26. The method of Claim 24, further comprising the step of programming each node to:
monitor one of the connecting paths for receipt of a packet of data;
determining whether the received packet of data is able to be overwritten with new data;
if the packet of data is able to be overwritten, determining whether that node has new data to send to another node;
if yes, building a new packet of data containing the new data and sending the new packet of data to a neighboring node; otherwise;
if no, building a new packet of data that is able to be overwritten with new data and sending the new packet of data to the neighboring node;
if the received packet of data is not able to be overwritten, determining whether the packet of data is addressed to that node; and
if the packet of data is addressed to that node, taking the data from the packet of data; and
if the packet of data is not addressed to that node, passing the packet of data on the connecting path to the neighboring node.

27. The method of Claim 24, wherein each node includes a lower level processor capable of taking the data from the packet of data and a higher-level circuit capable of performing a specific operation with the data taken from the packet of data.

28. The method of Claim 24, wherein each packet of data includes a header section and a payload section.

29. The method of Claim 24, wherein the connecting paths and the nodes form a time divided ring bus architecture.
